(19) Europäisches Patentamt
European Patent Office
Office européen des brevets

(11) **EP 4 561 061 A1**

(12) **EUROPEAN PATENT APPLICATION**

(43) Date of publication:
**28.05.2025 Bulletin 2025/22**

(21) Application number: **23307055.6**

(22) Date of filing: **24.11.2023**

(51) International Patent Classification (IPC):
**H04N 19/11** (2014.01)    **H04N 19/147** (2014.01)
**H04N 19/157** (2014.01)    **H04N 19/176** (2014.01)
**H04N 19/463** (2014.01)

(52) Cooperative Patent Classification (CPC):
**H04N 19/11; H04N 19/147; H04N 19/157;
H04N 19/176; H04N 19/463**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• **Ghaznavi Youvalari, Ramin
33900 Tampere (FI)**
• **ABDOLI, Mohsen
35235 Thorigné-Fouillard (FR)**

(74) Representative: **RVDB Rennes
44 rue Lariboisière
35235 Thorigné-Fouillard (FR)**

(54) **ENCODING/DECODING VIDEO PICTURE DATA**

(57)    The present disclosure relates a TIMD merge mode comprising at least one intra mode derivation candidate, i.e. at least one DIMD and/or TIMD mode, and associated information for intra-predicting a current block of a video picture VP. The at least one DIMD and/or TIMD mode candidates is collected from at least one previously (de)coded block which is predicted using either TIMD mode or DIMD mode or TIMD merge mode or DIMD merge mode. A merge list of TIMD merge mode candidates may be obtained (1510). Each TIMD merge mode candidate may contain at least one internal prediction mode of a DIMD or TIMD mode and their associated information. Each TIMD merge mode candidate is used for intra-prediction. The TIMD merge mode for intra-predicting the current block is determined (1520) by selecting one TIMD merge mode candidate of the merge list based on predicting costs obtained the TIMD merge mode candidates of the merge list.

**Fig. 14**

EP 4 561 061 A1

**Description**

<u>FIELD</u>

The present application generally relates to video picture encoding and decoding. Particularly, but not exclusively, the technical field of the present application is related to intra-prediction of video picture block.

<u>BACKGROUND</u>

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

At least one exemplary embodiment of the present application has been devised with the foregoing in mind.

ECM (Algorithm description of Enhanced Compression Model 10 (ECM 10), JVET-AE2025, Geneva, 11-19 July 2023) defines a Decoder-side Intra Mode Derivation (DIMD) mode and Template-based Intra Mode Derivation (TIMD) modes for determining predicted samples of a current block for both luma and chroma samples.

TIMD modes are derived based on template samples that may contain noise because of, for example, quantization noise which is typically higher in the block boundary samples. Then, a derived TIMD mode may not be very optimal for predicting the samples of a current block of a video picture VP.

One of the problem is to improve the derivation of TIMD mode for predicting the samples of the current block of the video picture VP.

<u>SUMMARY</u>

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of determining an intra-prediction mode, denoted TIMD merge mode, the method comprising:

- obtaining a merge list of at least one TIMD merge mode candidate, each TIMD merge mode candidate comprising at least one internal prediction mode and associated information used for intra-prediction; and
- determining the TIMD merge mode as candidate for intra-prediction of the current block from the merge list of TIMD merge mode candidates.

In some embodiments, a prediction cost for the TIMD merge mode is smaller than the prediction for other TIMD merge mode candidates of the merge list.

In some embodiments, the TIMD merge mode is determined by:

- obtaining a prediction cost over a template for each TIMD merge mode candidate mode of the merge list,; and
- selecting the TIMD merge mode based on the prediction cost obtained for the TIMD merge mode candidates.

In some embodiments, the selection of the TIMD merge is based on a Rate-Distortion optimization in which rate-distortion costs based on the obtained prediction costs are evaluated for intra-predictions of the current block, each intra-prediction being derived based on one TIMD merge mode candidate of the merge list.

In some embodiments, an index indicating the selected TIMD merge mode candidate is signalled in a bitstream.

In some embodiments, the method further comprising encoding in the bitstream, an information indicating whether the TIMD merge mode is enabled to be a candidate for intra-prediction of the current block of the video picture.

In some embodiments, the at least one TIMD merge mode candidate of the merge list is previously used for intra prediction of an adjacent and/or non-adjacent spatial neighboring block of the current block.

In some embodiments, the at least one TIMD mode candidate of the merge list is previously used for intra prediction of a block in a reference picture.

In some embodiments, the block in the reference picture is a co-located block of the current block or is in an extended area of the co-located block in the reference picture or the block in the reference picture is a block in the reference picture indicated by a motion vector from an adjacent and/or non-adjacent spatial neighboring block of the current block.

In some embodiments, at least one TIMD merge mode candidate of the merge list comprises at least one template-based prediction mode and associated information used for intra-prediction a previously coded or decoded block.

In some embodiments, at least one TIMD merge mode candidate of the merge list comprises at least one decoder-side intra mode derivation mode (DIMD) and associated information used for intra-prediction a previously coded or decoded block, and/or at least one TIMD merge mode candidate of the merge list comprises at least one TIMD merge mode and associated information used for intra-prediction a previously coded or decoded block.

In some embodiments, the signaling of the index indicating the selected TIMD merge mode in the bitstream depends on the availability of the at least one block previously coded or decoded based on a template-based prediction mode, a decoder-side intra mode derivation mode or a TIMD merge mode.

In some embodiments, a merge list is obtained for each channel of the video picture and TIMD merge mode candidates of a merge list obtained for a first channel belongs to a merge list obtained for a second channel of the video picture.

In some embodiments, a TIMD merge mode determined as candidate for intra-prediction of a current block of a first channel of the video picture is inherited by a co-located block in a second channel of the video picture.

In some embodiments, the information associated with a TIMD merge mode candidate is at least one of the following information:

- Primary TIMD mode;
- TIMD fusion mode(s) which are used for blending with the primary TIMD mode;
- Fusion weights for primary and fusion modes, -Blending flag indicator, Template cost of the primary and/or fusion modes, -Transform type(s), -Wide angle conditions for primary and fusion modes.

According to a second aspect of the present application, there is provided a method of encoding video picture data comprising a method according to the first aspect.

According to a third aspect of the present application, there is provided a method of decoding video picture data comprising a method according to the first aspect.

According to a four aspect of the present application, there is provided an apparatus comprising means for performing one of the methods according to the first, second and/or third aspect of the present application.

According to a fifth aspect of the present application, there is provided a computer program product including instructions which, when the program is executed by one or more processors, causes the one or more processors to carry out a method according to the first, second and/or third aspect of the present application.

According to a sixth aspect of the present application, there is provided a non-transitory storage medium carrying instructions of program code for executing a method according to the first, second and/or third of the present application.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows an example of coding-tree unit in accordance with HEVC;

**Figure 2** shows an example of partitioning coding units into prediction units in accordance with HEVC;

**Figure 3** shows an example of a CTU division in accordance with WC;

**Figure 4** shows examples of split modes supported in the multi-type tree partitioning in accordance with WC;

**Figure 5** shows a schematic block diagram of a method 100 of encoding a video picture VP in accordance with prior art;

**Figure 6** shows a schematic block diagram of a method 200 of decoding a video picture VP in accordance with prior art;

**Figure 7** shows an example of template for computing a Histogram of Gradients in accordance with prior art;

**Figure 8** shows an example of calculating an intra-predictor of a current block of the video picture based on a weighted linear combination of three intra-predictors in accordance with prior art;

**Figure 9** shows an example of co-located luma block corresponding to a chroma block. a selection of PSAO parameters in accordance with prior art;

**Figure 10** shows an example of definition of non-adjacent spatial neighboring blocks in accordance with prior art;

**Figure 11** shows an example of the first template of a block used for template prediction, and an example of the second template used for calculating a prediction cost;

**Figure 12** shows examples of reference lines in accordance with prior art;

**Figure 13** shows examples of vertical and horizontal split of block in accordance with prior art;

**Figure 14** illustrates an example of a merge list and examples of information associated to TIMD merge mode candidate of the merge list in accordance with some embodiments.

**Figure 15** shows a flowchart of a method 1500 of determining a TIMD merge mode as candidate for intra-prediction of a current block of the video picture VP in accordance with some embodiments;

**Figure 16** shows an example of syntax that may be added to the SPS of the underlying codec for signaling the information indicating whether the TIMD merge mode is enabled to be a candidate for intra-prediction of the current block of the video picture in accordance with embodiments;

**Figure 17** shows an example of syntax that may be added to the CU syntax of the underlying codec for signaling the information indicating whether the TIMD merge mode is enabled to be a candidate for intra-prediction of the current block of the video picture in accordance with some embodiments;

**Figure 18** shows examples of adjacent spatial neighboring blocks of the current block in accordance with some embodiments;

**Figure 19** shows an example of motion vector that inherits from one adjacent spatial neighboring block of the current block in accordance with some embodiments;

**Figure 20** shows an example of different block partitioning of a chroma block and a co-located luma block in accordance with some embodiments;

**Figure 21** shows a block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspect relates to receiving/accessing a decoded bitstream.

At least one of the exemplary embodiments is described for encoding/decoding a video picture but extends to the encoding/decoding of video pictures (sequences of pictures) because each video picture is sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en, VVC (ISO/IEC 23090-3 Versatile Video Coding, ITU-T Recommendation H.266, https://www.itu.int/rec/T-REC-H.266-202008-I/en but may be applied to other standards and recommendations such as AV1 (AOMedia Video 1, http://aomedia.org/av1/specification/) for example. The at least one exemplary embodiment may apply to pre-existing or future-developed, and extensions of any such standards and recommendations. Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. In variants, the number of samples comprised in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A block of at least one luma sample or a block of at least one chroma sample may be considered when the picture/video format is the well-known (Y,Cb,Cr) format, or a block of at least one color sample when the picture/video format is the well-known (R, G, B) format.

The at least one exemplary embodiment is not limited to a particular picture/video format.

In the state-of-the-art video compression systems such as HEVC or VVC low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left bounds spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH**). For example, the default CTU size (default CTU height, default CTU width) may equal to 128 (**CTU DW=CTU DH**=128). A default CTU size (height, width) is encoded into the bitstream, for example at a sequence level in the Sequence Parameter Set (SPS).

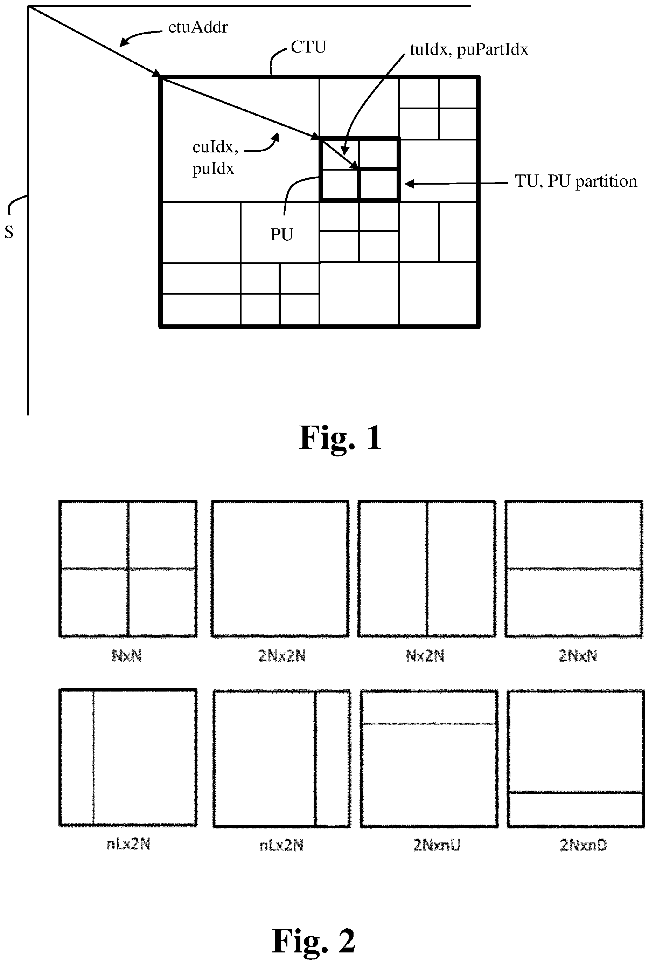

The spatial position of a CTU in a CTU grid is determined from a CTU address **ctuAddr** defining a spatial position of the top-left corner of a CTU from an origin. As illustrated on **Figure 1,** the CTU address may define the spatial position from the top-left corner of a higher-level spatial structure S containing the CTU.

A coding tree is associated with each CTU to determine a tree-division of the CTU.

As illustrated on **Figure 1,** in HEVC, the coding tree is a quad-tree division of a CTU, where each node is called a Coding Unit (CU). The spatial position of a CU in the video picture is defined by a CU index **cuIdx** indicating a spatial position from the top-left corner of the CTU. A CU is spatially partitioned into one or more Prediction Units (PU). The spatial position of a PU in the video picture VP is defined by a PU index **puIdx** defining a spatial position from the top-left corner of the CTU and the spatial position of an element of a partitioned PU is defined by a PU partition index **puPartIdx** defining a spatial position from the top-left corner of a PU. Each PU is assigned some intra or inter prediction data.

The coding mode intra or inter is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuIdx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated on **Figure 2.** They include square partitions (2Nx2N and NxN), which are the only ones used in both Intra and Inter predicted CUs, symmetric non-square partitions (2NxN, Nx2N, used only in Inter predicted CUs), and asymmetric Partitions (used only in Inter predicted CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

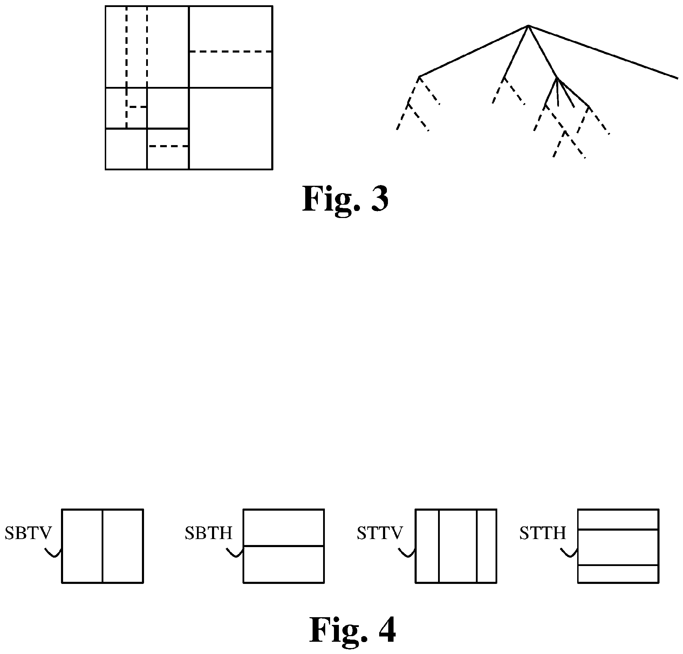

As illustrated on **Figure 3**, in VVC, the coding tree starts from a root node, i.e., the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 4.** These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

Contrary to HEVC, in VVC, in most cases, CU, PU and TU have equal size, which means coding units are generally not partitioned into PU or TU, except in some specific coding modes.

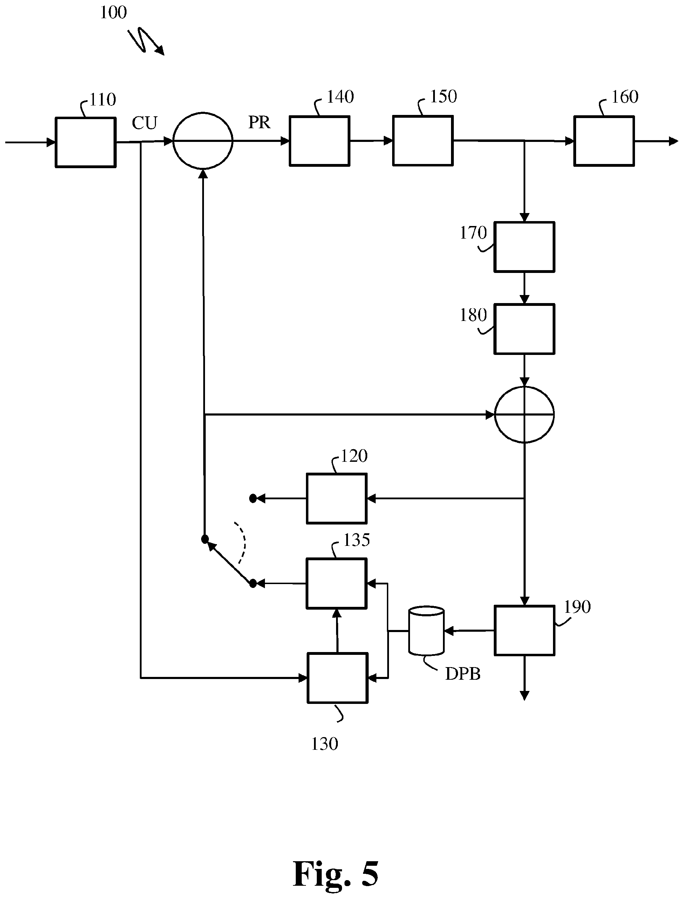

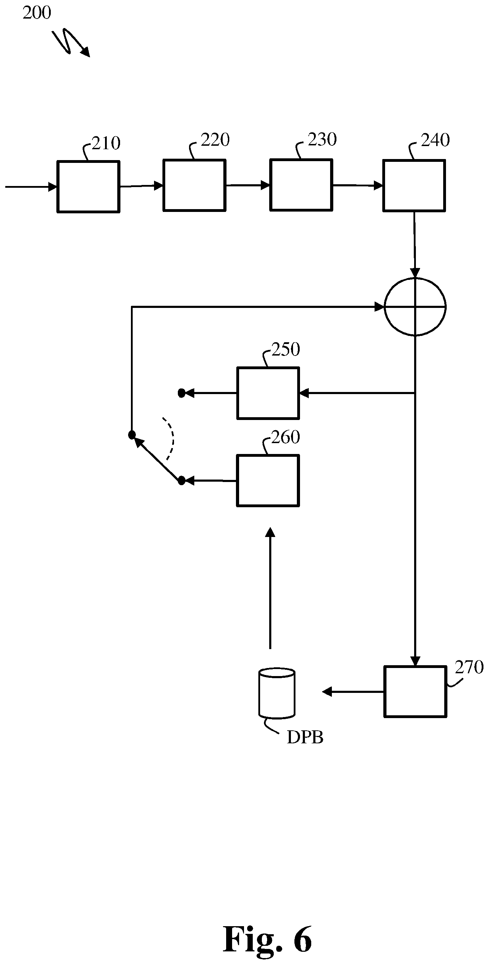

**Figures 5** and **6** provide an overview of video encoding/decoding methods used in current video standard compression systems like HEVC or VVC for example.

**Figure 5** shows a schematic block diagram of steps of a method 100 of encoding a video picture VP in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in HEVC, a picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples, in short block, may then be either a CU (if the CU comprises a single PU) or a PU of a CU.

Each block is encoded along an encoding loop also called "in loop" using either an intra or inter prediction mode.

Intra prediction (step 120) used intra prediction data. Intra prediction consists in predicting a current block by means of an intra-predicted block based on already encoded, decoded and reconstructed samples located around the current block, typically on the top and on the left of the current block. Intra prediction is performed in the spatial domain.

In inter-prediction mode, motion estimation (step 130) and motion compensation (135) are performed. Motion estimation searches, in one or more reference video picture(s) used to predictively encode the current video picture, a candidate reference block that is a good predictor of the current block. For instance, a good predictor of the current block is a predictor which is similar to the current block. The output of the motion estimation step 130 is inter-prediction data comprising motion information (typically one or more motion vectors and one or more reference video picture indices) associated to the current block and other information used for obtaining a same predicted block at the encoding/decoding side. Next, motion compensation (step 135) obtains a predicted block by means of the motion vector(s) and reference video picture index (indices) determined by the motion estimation step 130. Basically, the block belonging to a selected reference video picture and pointed to by a motion vector may be used as the predicted block of the current block. Furthermore, since motion vectors are expressed in fractions of integer pixel positions (which is known as sub-pel accuracy motion vector representation), motion compensation generally involves a spatial interpolation of some reconstructed samples of the reference video picture to compute the predicted block.

Prediction information data is signaled into the bitstream. The prediction information may comprise prediction mode (intra or inter or skip), intra/inter prediction data and any other information used for obtaining a same predicted CU at the decoding side.

The method 100 selects one prediction mode (the intra or inter prediction mode) by optimizing a rate-distortion trade-off taking into account the encoding of a prediction residual block calculated, for example, by subtracting a candidate predicted block from the current block, and the signaling of prediction information data required for determining said candidate predicted block at the decoding side.

Usually, the intra and inter prediction modes are set in a list of Most Probable candidate Modes (MPM list) and the best prediction mode is given as being the prediction mode p* for a current block given by:

$$p^* = \underset{p \in P}{\text{Argmin}}\{RD_{cost}(p)\} \quad (1)$$

where P is the MPM list for the current block, $p$ represents a candidate coding mode in that MPM list, $RD_{cost}(p)$ is a rate-distortion cost of candidate prediction mode $p$, typically expressed as:

$$RD_{cost(p)} = D(p) + \lambda \cdot R(p)$$

$D(p)$ is the distortion between the current block and a reconstructed block obtained after encoding/decoding the current block based on the candidate prediction mode $p$, $R(p)$ is a rate cost associated with the coding of the current block based on the prediction mode $p$, and $\lambda$, is the Lagrange parameter representing the rate constraint for coding the current block and typically computed from a quantization parameter Qp used for encoding the current block.

The current block is usually encoded from a prediction residual block PR. More precisely, a prediction residual block PR is calculated, for example, by subtracting the best predicted block from the current block. The prediction residual block PR is then transformed (step 140) by using, for example, a DCT (discrete cosine transform) or DST (Discrete Sinus transform) type transform, or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170) and inverse transformed (180) (or not) as part of the encoding loop, leading to a decoded prediction residual block. The decoded prediction residual block and the predicted block are then combined, typically summed, which provides the reconstructed block.

Other information data may also be entropy encoded in step 160 for encoding a current block of the video picture VP.

In-loop filters (step 190) may be applied to a reconstructed picture (comprising reconstructed blocks) to reduce compression artefacts. Loop filters may apply after all picture blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next vide picture to encode.

**Figure 6** shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream of encoded video picture data. For instance, this bitstream has been generated in accordance with the method 100.

Other information data may also be entropy decoded for decoding from the bitstream a current block of the video picture VP.

In step 220, a reconstructed picture is divided into current blocks based on the partitioning information. Each current block is entropy decoded from the bitstream along a decoding loop also called "in loop". Each decoded current block is either a quantized transform coefficient block or quantized prediction residual block.

In step 230, the current block is de-quantized and possibly inverse transformed (step 240), to obtain a decoded prediction residual block.

On the other hand, the prediction information data is used to predict the current block. A predicted block is obtained through its intra prediction (step 250) or its motion-compensated temporal prediction (step 260). The prediction process performed at the decoding side is identical to that of the encoding side.

Next, the decoded prediction residual block and the predicted block are then combined, typically summed, which provides a reconstructed block.

In step 270, in-loop filters may apply to a reconstructed picture (comprising reconstructed blocks) and the reconstructed blocks, or the filtered reconstructed blocks form a reference picture that may be stored into a decoded picture buffer (DPB) as above discussed (**Figure 5**).

In step 130/135 of **Figure 5** or step 260 of **Figure 6,** an inter-predicted block is defined from inter-prediction data associated with the current block (CU or a PU of a CU) of a video picture. This inter-prediction data comprises motion information that may be represented (coded) according to the so-called whole-block-based AMVP mode (Adaptive Motion Vector Prediction) or the so-called whole-block-based merge mode.

ECM defines a DIMD mode for determining predicted samples of a current block for both luma and chroma samples. DIMD mode is not a linear-model based mode, in short non-LM mode, i.e. an intra prediction mode that does not refer to a linear model, and DIMD mode does not require explicit parameters signaling such as, for instance planar prediction mode, or Direct mode (DM).

For luma sample prediction, the use of DIMD luma mode is signalled in a bitstream by a single flag and the intra predictor is not explicitly signalled in the bitstream but derived based on a gradient analysis of neighbouring reconstructed luma samples i.e. DIMD luma mode is implicit. Thus, intra predictor is derived based on a DIMD luma mode during reconstruction process identically at the encoder and decoder sides.

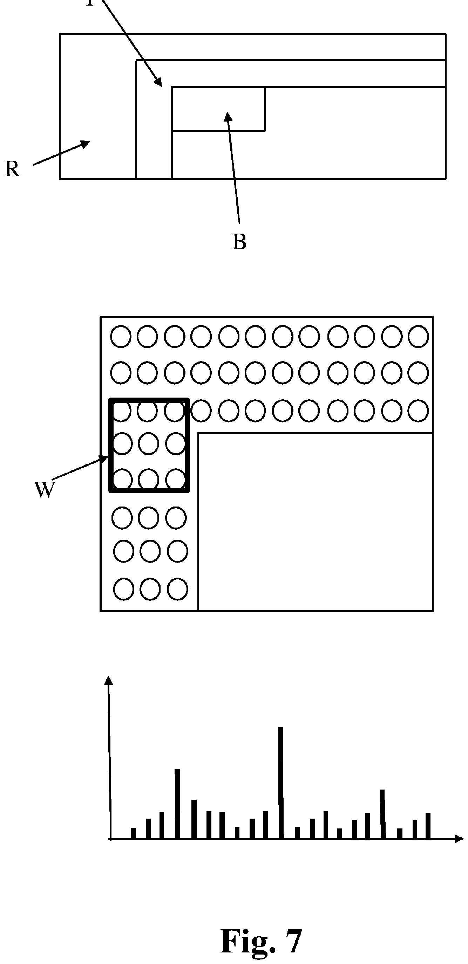

In DIMD luma mode, as illustrated on **Figure 7,** a 3-samples wide (in width or height) template area T (composed of left, above and above-left reconstructed luma samples of reconstructed area R) is defined in which edge detection filters (3x3 horizontal and vertical Sobel filters), adjacent to a current block B (current CU), are applied in order to determine the amplitude and angle of luminance directions (orientation) for each middle line sample of the (available) template area T. A Histogram of Gradients (HoG) is computed where each entry corresponds to conventional intra angular modes and cumulated intensities (amplitudes) are stored:

$$angle = \arctan \left( G_{hor}/G_{ver} \right)$$

$$amplitude = |G_{hor}| + |G_{hor}|$$

with $G_{hor}$ and $G_{ver}$ are the intensity of pure horizontal and vertical directions as calculated by Sobel filters. Conventional intra angular modes refer to the existing intra angular modes in for example HEVC and VVC specifications, where each angular mode specifically aims in capturing the direction of the texture in a certain direction or angle. Note the term non-angular modes refer to intra modes that do not capture the direction or angle of the texture. For example, DC (Direct coding) and Planar intra modes can be considered as non-angular modes.

In DIMD luma mode, a luma blending (mixing, fusing) is applied as a weighted average of three luma predictors of the current block: two HoG-based predictors and a planar predictor (M. Abdoli et al, "Non-CE3: Decoder-side Intra Mode Derivation with Prediction Fusion Using Planar", JVET-O0449, Gothenburg, July 2019).

A planar predictor is derived from a planar mode in which the predicted sample values are obtained as a weighted average of 4 reference sample values. Here, the reference samples in the same row or column as the current sample and the reference samples on the bottom-left and on the top-right position with respect to the current block are used. In VVC, a reference sample smoothing filter is also applied for the Planar mode in the luma component depending on the block size.

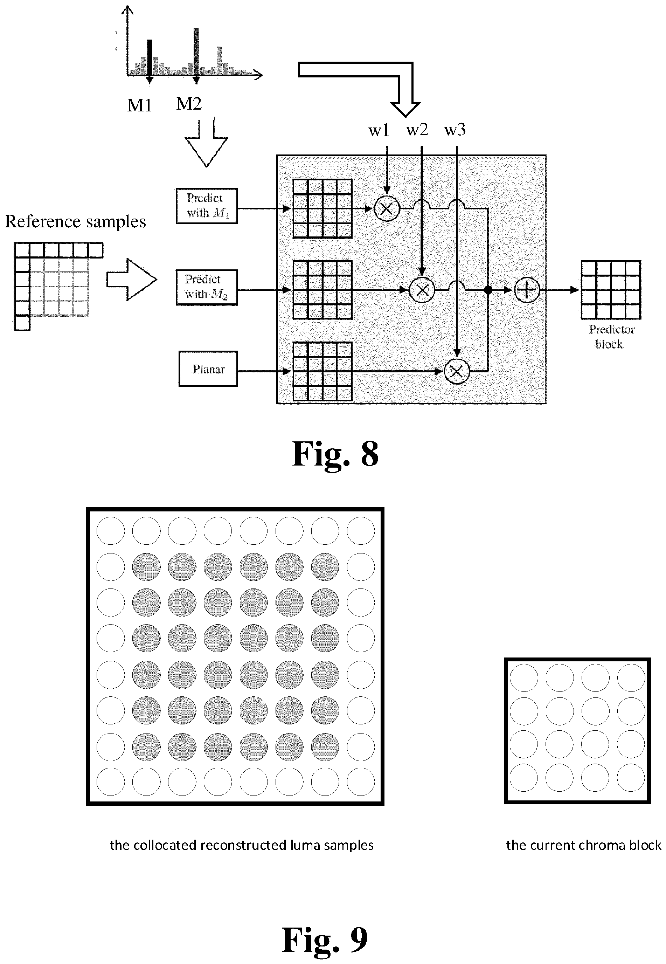

As illustrated on **Figure 8,** the prediction block of the current block are derived from a weighted linear combination of six predictors: Five HoG-based predictors derived by using the five most represented angular intra modes Mi (i=1 to 5) and one predictor derived by using a planar mode. **Figure 8** illustrates a variant wherein only the prediction block is derived as a weighted linear combination of three HoG-based predictors but the principle may be easily extended to six predictors: two HoG-based predictors M1 and M2 (having the largest histogram amplitude values) selected from the HoG and a third predictor derived by using a planar mode. The weighted linear combination of the three predictors uses weights $w_1$, $w_2$, $w_3$ derived, for example as follows: the weight of planar is fixed to 21/64 (~1/3). The remaining weight of 43/64 (~2/3) is then shared between the two other weights, proportionally to the amplitude of their HoG bars. As another example, the three weights may be derived as follows for a block of size $W \times H$: a weight $wDimd_i$ is derived for each of the three predictors as discussed below in relation with DIMD merge mode. Next, the weight $w_i$ for each of the three derived modes is derived based on the weight $wDimd_i$ as follows: If the one the above or left HoG magnitudes is twice larger than the other one. In this case, the weights $w_i(x, y)$ are location dependent and computed as follows:

If the above HoG is twice the left, then:

$$w_i(x,y) = wDimd_i + \Delta_i - 2\Delta_i \frac{y}{(H-1)},$$

If the left HoG is twice the above, then:

$$w_i(x,y) = wDimd_i + \Delta_i - 2\Delta_i \frac{x}{(W-1)},$$

where $\Delta_i$ is pre-defined and may be set to 10.

For chroma sample prediction, the use of DIMD chroma mode is signalled in a bitstream by a single flag and the intra predictor is not explicitly signalled in the bitstream but derived by using a gradient analysis of neighbouring reconstructed luma and chroma samples i.e. DIMD chroma mode is implicit. Thus, intra predictor is derived from a DIMD chroma mode during reconstruction process identically at the encoder and decoder sides.

In DIMD chroma mode, an intra predictor of a chroma block may be derived based on co-located reconstructed luma samples of a luma block associated with the chroma block to be predicted. Specifically, a horizontal gradient and a vertical gradient are calculated for each co-located reconstructed luma sample (grey circles on **Figure 9,** extracted from JVET-Y0092 (Hyeongmun Jang et al, "CE5-2.5 : De-block filtering with 4x4 chroma sample grid", JVET-Y0092, Gothenburg, July 2019) to build a HoG. Then, the intra prediction mode with the largest histogram amplitude value is selected from the HoG.

In variant, in DIMD chroma mode,an intra predictor of a chroma block may be derived based on neighboring reconstructed chroma samples.

In a variant, an intra predictor of a chroma block may be derived based on co-located reconstructed luma samples of a luma block associated with the chroma block to be predicted and on neighboring reconstructed chroma samples.

Usually, when the intra prediction mode derived from the DIMD chroma mode is the same as the intra prediction mode derived from the DM (direct mode) mode, the intra prediction mode with the second largest histogram amplitude value is selected as the DIMD chroma mode.

A DIMD merge mode is also proposed in JVET-AF0120 (Saverio Blasi et al., "EE2-2.1 DIMD merge", JVET-AF0120, Hannover Oct. 2023). When using DIMD merge mode, a prediction block of the current block is derived from DIMD information that is extracted from neighbouring blocks of the current block. Firstly, a Merged Histogram of Gradients (MHoG) is computed for the current block based on the Histogram of Gradients HoG of at least one DIMD neighbouring block i.e. a neighboring block encode/decoded based on a prediction block derived based on the DIMD or DIMD merge mode. When a single DIMD neighbouring block is available, then its histogram of gradients (HoG) is used to form the MHoG for the current block. If more than one DIMD neighbouring blocks are available, the corresponding HoGs are combined by means of amplitude averaging to derive the MHoG. Up to maximum 13 DIMD neighboring blocks are considered to extract DIMD information. Next, the MHoG is used to define DIMD merge modes and weights, as discussed above in relation with DIMD mode. The conventional intra angular modes and their weights corresponding to the five highest amplitudes in the MHoG are selected, and the corresponding predictors are blended as in DIMD merge mode.

The DIMD information used to derive a predictor of a current block depends on the DIMD neighboring blocks. In JVET-AF01 06 (Junyan Huo et al., "EE2-related: Non-adjacent spatial candidates for DIMD merge", Hannover, oct. 2023), DIMD neighboring blocks may be non-adjacent spatial neighboring blocks, i.e neighboring block of a current block that does not share a corner or a boundary with the current block.

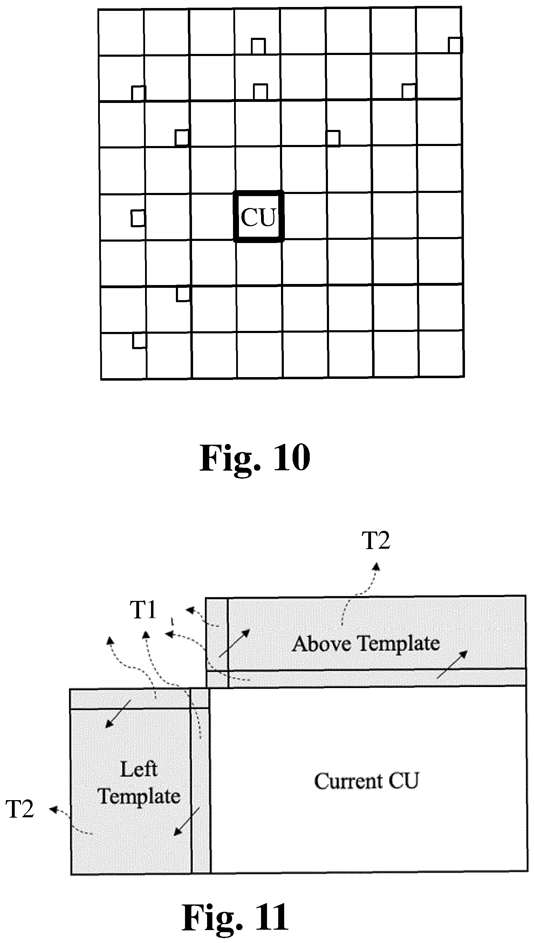

For example, **Figure 10** shows an example of definition of non-adjacent spatial neighboring blocks. The distances between non-adjacent spatial neighboring blocks of the current block and the current block may be defined based on the width and height of the current block.

A DIMD mode or DIMD merge mode (for luma or chroma) is associated with associated information such as weights as discussed above. Information associated with DIMD mode or DIMD merge mode may be stored in memory for a block of the video picture VP that is encoded/decoded based on a prediction block derived based on the DIMD mode or DIMD merge mode.

EMC further defines Template-based Intra Mode Derivation (TIMD) modes. A TIMD mode is used for predicting a block and leads to the derivation of an intra predictor of the block based on previously reconstructed samples of the video. A TIMD mode associated with a block is also associated with a prediction cost evaluated based on samples of a template defined around the block.

For example, a TIMD mode may be derived for each intra prediction candidate mode of the MPM list, as well as for each of the wide-angle modes if the above-right and/or bottom-left samples of a first template T1 are available. Wide angle modes are described in JVET-Q2002 (Algorithm description for Versatile Video Coding and Test Model 8 (VTM 8), JVET-Q2002, Brussels, 7-17 January 2020. In brief, conventional angular intra prediction directions are defined from 45 degrees to -135 degrees in clockwise direction. In VVC, several conventional angular intra prediction modes are adaptively replaced with wide-angle intra prediction modes for non-square blocks. The replaced modes are signaled using the original mode indexes, which are remapped to the indexes of wide angular modes after parsing. The number of replaced modes in wide-angular direction mode depends on the aspect ratio of a block. Two vertically adjacent predicted samples may use two non-adjacent reference samples in the case of wide-angle intra prediction. Hence, low-pass reference samples filter and side smoothing are applied to the wide-angle prediction to reduce the negative effect of the increased gap $\Delta p\alpha$. If a wide-angle mode represents a non-fractional offset. There are 8 modes in the wide-angle modes satisfy this condition, which are [-14, -12, -10, -6, 72, 76, 78, 80]. When a block is predicted by these modes, the samples in the reference buffer are directly copied without applying any interpolation. With this modification, the number of samples needed to be smoothing is reduced. Besides, it aligns the design of non-fractional modes in the conventional prediction modes and wide-angle modes.

The prediction cost associated with a TIMD mode may be evaluated based on a Sum of Absolute Transformed Difference (SATD) or a Sum of Absolute Difference (SAD) or a Sum of Squared Errors (SSE) between samples of a second template T2 of the block and samples of a reconstructed template of the block. Samples of the reconstructed template of the block are samples located in the second template T2 of the block that are encoded and decoded based on the intra prediction candidate mode or on a wide-angle mode if exists. A list of DIMD candidate modes associated with prediction costs may then be built. Next, two intra prediction modes DIMD1 and DIMD2 with the minimum prediction cost are selected from the list of DIMD candidate modes. These two selected DIMD modes DIMD1 and DIMD2 are considered as being two TIMD modes TIMD1 and TIMD2. Next, a condition between the prediction costs of the two selected TIMD modes is checked to determine if a blending of these two selected TIMD modes is applied or not.

For example, the condition is fulfilled when the prediction cost of the second selected TIMD mode TIMD2 is lower than twice the prediction cost of the first selected TIMD mode TIMD1 (corresponding to the minimum prediction cost): cost (TIMD2 < 2*cost(TIMD1). If the condition is fulfilled, a fusion is applied, otherwise the TIMD mode added to the MPM list is the first TIMD mode TIMD1.

**Figure 11** shows an example of the first template T1 of a block (current CU) used for template prediction, and an example of the second template used for calculating a prediction cost. PDPC weights are obtained by applying a PDPC (Position dependent intra prediction combination) filtering to the predictions derived based on the two selected TIMD modes. The PDPC weights are similar to what is used in VVC's PDPC process where the weights depend on the block dimensions. The predictions derived based on the two selected TIMD modes may then be blended with the PDPC weights such weighted intra prediction is used to code the current block.

The weights may be computed from their prediction costs as follows:

$$\text{weight}1 = \text{costMode2} / (\text{costMode1} + \text{costMode2})$$

weight2 = 1 - weight1 TIMD mode may then be associated with information that may indicate the two selected TIMD modes and the fusion (blending) flag indicating if the blending of the two selected TIMD modes is enabled. Said associated information may also indicate the weights weight1 and weight2 and/or the prediction cost. Information associated with TIMD mode may be stored in memory for a block of the video picture VP that is encoded/decoded based on a prediction block derived based on the TIMD mode.

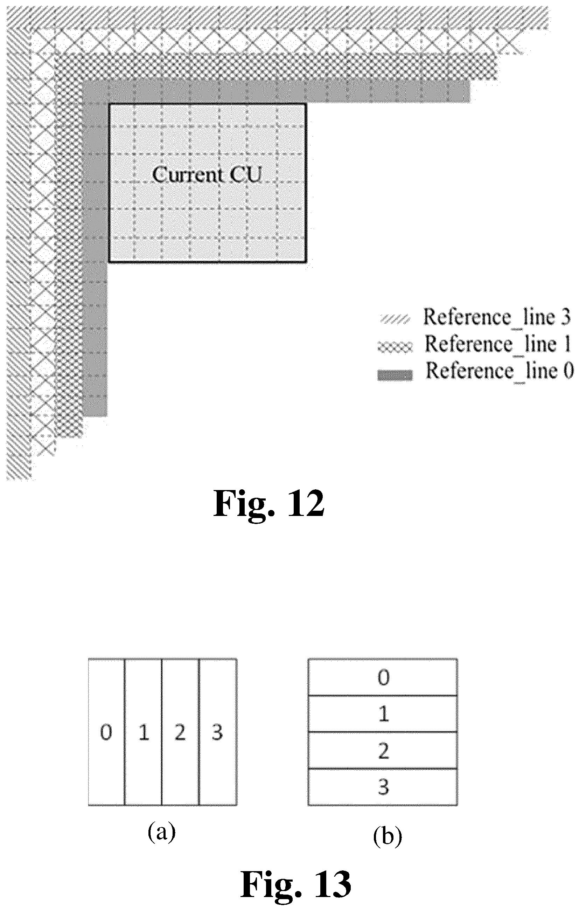

EMC further defines an intra prediction fusion method that may be used to derive prediction block of a current block as a weighted combination of multiple intra-prediction blocks generated from different reference lines. Reference line refers to the samples in a certain row and/or column from the reconstructed area used for intra prediction. For example, the immediate row of samples from the above reference side of the current block is referred to as reference line 0. **Figure 12** illustrates examples of reference lines. Basically, in the intra prediction fusion method, multiple intra-prediction blocks are first generated and then fused by weighted averaging. The intra prediction fusion method may be summarized as follows: For angular intra prediction modes including the single mode case of TIMD and DIMD, the intra prediction fusion method derives intra prediction block by weighting intra prediction blocks obtained from multiple reference lines represented as $p_{fusion} = w_0 p_{line} + w_1 p_{line+1}$, where $p_{line}$ is the intra prediction block from a reference line 0 (immediate reference line from the above and/or left block boundaries) and $p_{line+1}$ is the intra prediction block from the reference line above the default reference line. The weights are set as $w_0 = 3/4$ and $w_1 = 1/4$. The angular intra prediction modes may be obtained in various ways. For example, the same intra modes which are derived using TIMD and DIMD modes may be used. Or they may be decided based on rate-distortion optimizations in the encoder side and signaled in a bitstream to the decoder.

For TIMD mode with blending, $p_{line}$ is used for the first selected TIMD mode TIMD1 ($w_0 = 1$, $w_1 = 0$) and $p_{line+1}$ is used for the second selected TIMD mode TIMD2 ($w_0 = 0$, $w_1 = 1$).

For DIMD mode with blending, the number of intra prediction blocks selected for a weighted average is increased from 3 to 6.

Intra prediction fusion method is applied to luma blocks when angular intra mode has non-integer slope (required reference samples interpolation) and the block size is greater than 16, it is used with MRL (Multiple Reference Line) as illustrated in **Figure 12** and not applied for ISP coded blocks. ISP is an intra sub-partition as defined in JVET-Q2002.

VVC further defines a Combined Intra/Inter prediction (CIIP) mode that basically consists in deriving a prediction block of the current block as a weighted linear combination of an intra-prediction block and an inter-prediction block. A first weight wIntra is applied on the intra-prediction block and a second weight wInter is applied on the inter-prediction block.

For example, the inter-prediction block is derived based on CIIP-TM merge candidate (referring to inter prediction with template matching mechanism) and the intra-prediction block is derived based on a selected TIMD mode.

For near-horizontal modes (2 <= angular mode index < 34), the current block is vertically split into 4 sub-blocks as shown in **Figure 13(a);** for near-vertical modes (34 <= angular mode index <= 66), the current block is horizontally split into 4 sub-blocks as shown in **Figure 13(b).** For example, the weights wIntra, winter for the different sub-blocks are shown in Table 1.

Table 1

| The sub-block index | (wIntra, winter) |
| --- | --- |
| 0 | (6, 2) |
| 1 | (5, 3) |
| 2 | (3, 5) |
| 3 | (2, 6) |

According to an aspect, the present disclosure relates to a TIMD merge mode comprising at least one intra mode derivation candidate, i.e at least one DIMD and/or TIMD mode, and associated information for intra-predicting a current block of a video picture VP. The at least one DIMD and/or TIMD mode candidates is collected from at least one previously (de)coded block which is predicted using either TIMD mode or DIMD mode or TIMD merge mode or DIMD merge mode. A merge list of TIMD merge mode candidates may be obtained. Each TIMD merge mode candidate may contain at least one internal prediction mode of a DIMD or TIMD mode and their associated information. Each TIMD merge mode candidate is used for intra-prediction of a previously (de)coded block. The TIMD merge mode for intra-predicting the current block is determined by selecting one TIMD merge mode candidate of the merge list based on predicting costs obtained the TIMD merge mode candidates of the merge list.

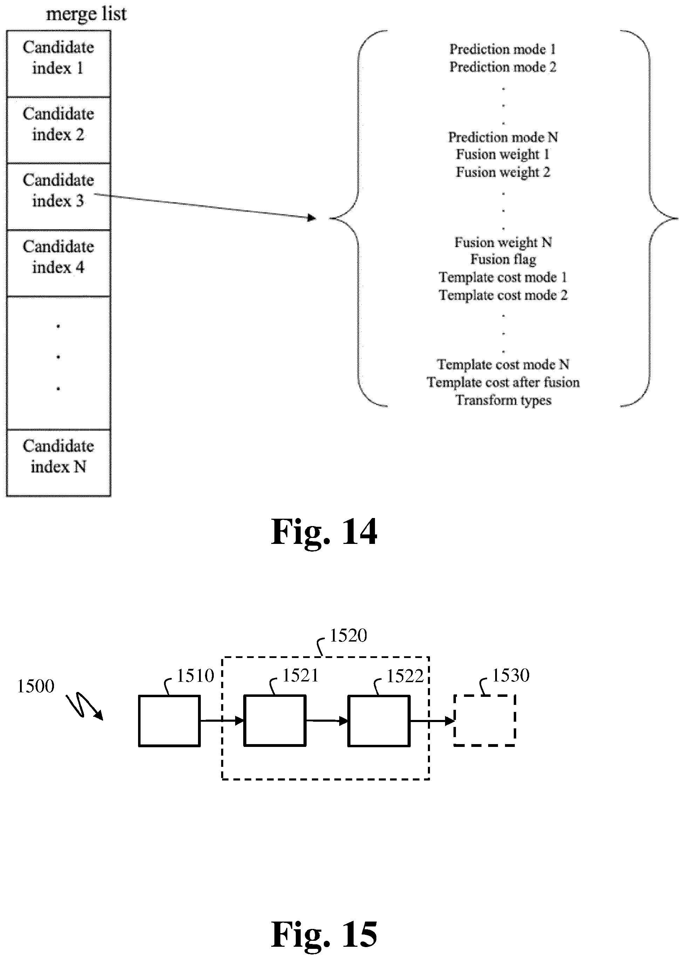

**Figure 14** illustrates an example of a merge list and examples of information associated to each TIMD merge mode candidate of the merge list in accordance with some embodiments.

In the example the merge list comprises N TIMD merge mode candidates associated with indices 'candidate index 1' to 'candidate index N'.

Each TIMD merge mode candidate comprises at least one internal prediction mode with associated information used for intra-prediction one previously coded or decoded block. For example, the TIMD merge mode candidate with the index 'candidate index 3' comprises a list of internal prediction modes such with associated information.

Primary TIMD mode: the main intra prediction mode (could be any angular or non-angular mode) usually has the highest fusion weight among the multiple TIMD modes

TIMD fusion modes: the rest of the intra modes (could be any angular or non-angular modes) which have lower fusion weights than primary mode. Blending flag: a flag indicating whether the primary mode and fusion modes are blended or not.

Template cost: the prediction cost of the of for example each primary and fusion modes over the defined template

Transform types: the transform type used for the TIMD coded block Wide angle conditions indicate whether each candidate (primary and/or fusion modes) are wide angle modes or not.

Such associated information may be one or more of the below:

- Primary TIMD mode: the main intra prediction mode (could be any angular or non-angular mode) usually has the highest fusion weight among the multiple TIMD modes;

- TIMD fusion mode(s) which are used for blending with the primary TIMD mode: the rest of the intra modes (could be any angular or non-angular modes) which have lower fusion weights than primary mode;

- Fusion weights for primary and fusion modes;

- Blending flag indicator: a flag indicating whether the primary mode and fusion modes are blended or not.;

- Template cost of the primary and/or fusion modes;

- Transform type(s): the transform type used for the TIMD coded block;

- Wide angle conditions for primary and fusion modes indicate whether each candidate (primary and/or fusion modes) are wide angle modes or not..

Selecting the TIMD merge mode as candidate for intra-prediction of a current block of the video picture VP among TIMD merge mode candidates of the merge list avoids derivation of TIMD or DIMD modes that would contain noise because the TIMD or DIMD modes have been previously selected for predicting other blocks of the video picture VP (that comprises the current block to be predicted) or previous encoded/decoded video pictures.

**Figure 15** shows a flowchart of a method 1500 of determining a TIMD merge mode as candidate for intra-prediction of a current block of the video picture VP in accordance with some embodiments. For example, the method 1500 may be performed by an encoder or a decoder. In some examples, the steps of the method 1500 may be sub-steps of step 120 of the method 100 of **Figure 5** or sub-steps of the step 250 of the method 200 of **Figure 6.**

In step 1510, a merge list of at least one TIMD merge mode candidate is obtained. Each TIMD merge mode candidate comprising at least one internal prediction mode and associated information used for intra-prediction.

In some embodiments, each TIMD merge mode candidate comprising at least one internal prediction mode and associated information used for intra-prediction of at least one previously coded or decoded block. For example, A TIMD merge mode may be a TIMD or DIMD mode used for intra-prediction of at least one previously coded or decoded block.

In step 1520, the TIMD merge mode is determined as candidate for intra-prediction of the current block from the merge list of TIMD merge mode candidates.

In some embodiment, determining (1520) the TIMD merge mode comprises steps 1521 and step 1522. In step 1521, a prediction cost is obtained over a defined template for each TIMD merge mode candidate mode of the merge list.

The defined template may be a certain area from the reconstructed samples from the neighbor of a block. For example the template around a current block may be the template of **Figure 11.** The template size and shape may be determined based on block size for example. When a TIMD merge mode is a DIMD mode, the template definition for TIMD and DIMD modes may the same or template definition for TIMD mode and template definition for DIMD mode are different.

In step 1522, the TIMD merge mode is selected based on the prediction cost obtained for the TIMD merge mode candidates. In other words, a prediction cost for the TIMD merge mode is smaller than the prediction for other TIMD merge mode candidates of the merge list.

In some embodiments of method 1500, in step 1530, an information indicating whether the TIMD merge mode is enabled to be a candidate for intra-prediction of the current block of the video picture is signalled in the bitstream i.e. encoded in the bitstream by an encoder and decoded from the bitstream by a decoder.

This embodiment allows enabling/disabling the use of the TIMD merge mode as candidate for intra-prediction the current block.

For example, the information is a TIMD merge flag encoded in the bitstream for the current block.

In some embodiments, the information indicating whether the TIMD merge mode is enabled to be a candidate of intra-prediction of the current block is signalled at the sequence level such as in the sequence parameter set (SPS), at picture level such as in the picture parameter set (PPS) and in the picture header (PH) or at the block level (CU level).

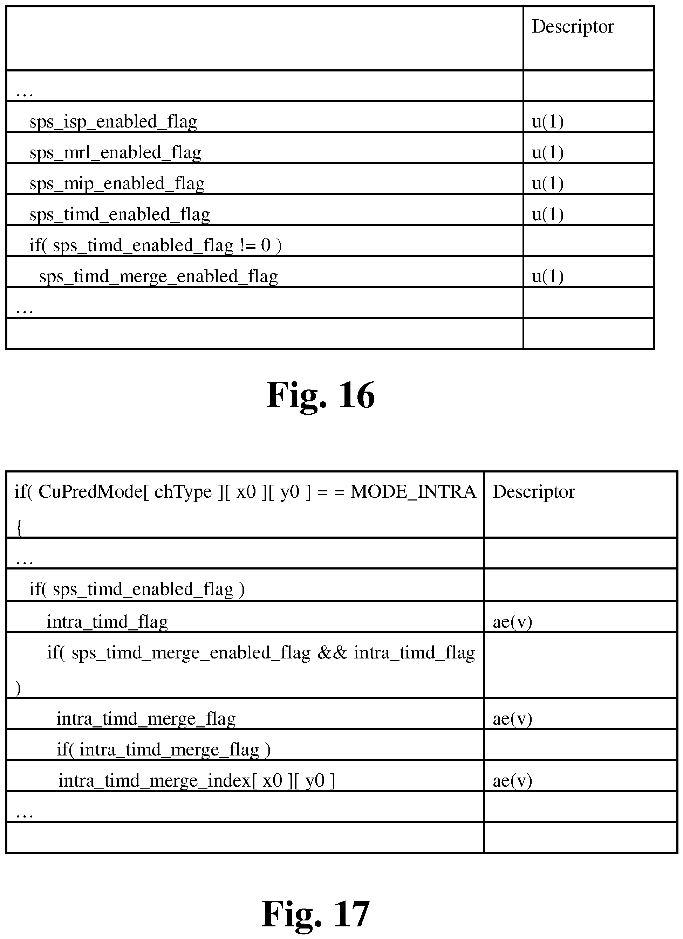

**Figure 16** shows an example of syntax that may be added to the SPS of the underlying codec for signaling the information indicating whether the TIMD merge mode is enabled to be a candidate for intra-prediction of the current block of the video picture in accordance with embodiments.

The syntax element **sps_timd_enabled_flag** indicates whether the TIMD mode is enabled to be a candidate for intra-prediction for the blocks of the video picture.

The syntax element **sps_timd_merge_enabled_flag** indicates whether the TIMD merge mode is enabled to be a candidate for intra-prediction for blocks of the video picture.

**Figure 17** shows an example of syntax that may be added to the CU syntax of underlying codec for signaling the information indicating whether the TIMD merge mode is enabled to be a candidate for intra-prediction of the current block of the video picture in accordance with embodiments.

The syntax element **intra_timd_flag** indicates whether the legacy TIMD mode is enabled to be a candidate for intra-prediction of the current CU.

The syntax element **intra_timd_merge_flag** indicates whether the TIMD merge mode is enabled to be a candidate for intra-prediction of the current CU.

The syntax element **intra_timd_merge_index[ x0 ][ y0 ]** indicates the TIMD merge mode candidate index from the merge list.

In examples **Figure 16** and **Figure 17,** the TIMD merge mode is defined as a sub-mode of the legacy TIMD mode, hence. If the legacy TIMD mode is disabled, then the TIMD merge mode is also disabled. It needs to be understood that the TIMD merge mode's usage may be also independent of the legacy TIMD mode.

In some embodiment, the TIMD merge mode may be enabled for certain pictures or slices. For example, it may be enabled only in intra-prediction based coded pictures or slices, and it may be disabled in inter-prediction based coded pictures or slices.

In some embodiments, at least one TIMD merge mode candidate of the merge list previously used for intra-prediction of a block B of the video may be a TIMD mode with associated information. The TIMD mode uses a first template defined around the block B of the video for determining an intra-predictor of the block B and a second template defined around the block B for evaluating the prediction cost( **Figure 11**).

In some embodiments, at least one TIMD merge mode candidate of the merge list previously used for intra-prediction of a block B of the video may be a DIMD mode or DIMD merge mode and associated information.

In some embodiments, a prediction cost may be evaluated between the block B and a reconstructed block based on an intra-predictor derived based on the DIMD or DIMD merge mode.

In some embodiments, when a TIMD merge mode candidate contains multiple internal prediction modes, the template prediction cost of the TIMD merge mode candidate is calculated (step 1521) by summing or averaging the prediction costs of the internal prediction modes of the TIMD merge mode candidate over the template.

In some embodiments, the template prediction cost of the TIMD merge mode candidate is calculated (step 1521) by summing or averaging the prediction costs of the internal prediction modes of the TIMD merge mode candidate at block level.

In some embodiments, the cost of the two internal prediction modes may be weighted averaged at the pixel level. This means that each of the internal prediction modes is applied as predictor on the template samples and a pixel-wise distortion of each prediction mode is computed. The prediction cost of the TIMD merge mode candidate is then computed in a pixel-wise manner, such that different pixel positions on the template have different pixel-wise weight in the averaging.

In some embodiments, the prediction cost associated with a DIMD mode may be evaluated as a Sum of Absolute Difference (SAD) or Sum of Absolute Transform Difference (SATD) or Sum of Squared Errors (SSE) between samples of the block to be predicted and samples of a reconstructed of the block. Samples of the reconstructed block are samples located in the block that are encoded and decoded based on an intra-predictor derived based on the DIMD mode.

In some embodiments, at least one TIMD merge mode candidate mode of the merge list previously used for intra-prediction of the current block of the video is a TIMD merge mode.

In some embodiment of the method 1500, when step 1520 is a sub-step of step 120 of method 100, the selection of the TIMD merge mode from the at least one TIMD merge mode candidate of the merge list may be based on a Rate-Distortion optimization (RDO) similar to equation (1). The encoder may then evaluate rate-distortion costs for intra-predictions of the current block of the video picture VP, each intra-prediction being derived based on one TIMD merge mode candidate of the merge list and their associated prediction costs.

In some embodiments, an index indicating the determined TIMD merge mode candidate in the merge list may then be signalled in a bitstream i.e. the encoder encodes the index in the bitstream and a decoder decodes the index from the bitstream.

In some embodiment of step 1522, the at least one TIMD merge mode candidate of the merge list may be re-ordered or sorted to decrease the bitrate for signalling the index indicating the TIMD merge mode.

For example, the TIMD merge mode candidates of the merge list can be sorted based on their associated prediction costs. The prediction costs may be normalized before using them for sorting the TIMD merge mode candidates of the merge list. Precisely, the need for the normalization arises from the fact that stored prediction cost values might have been averaged on different numbers of pixels, depending on their block size. Therefore, a normalization could be done based on the block size or number of samples in the block or the associated template.

In some embodiment of the method 1500, when step 15210 is a sub-step of step 250 of method 200, and when the TIMD merge mode candidates of the merge list contain only TIMD modes, a decoder may evaluate the prediction cost of each TIMD mode over the defined templates and may select the TIMD merge mode candidate of the merge list that minimizes the template-based prediction cost.

This embodiment is advantageous because it avoids signalling an index indicating one TIMD merge mode candidate of the merge list.

In some embodiments, information associated with TIMD and/or DIMD modes calculated as discussed above may be modified before considered as being information associated with TIMD merge mode candidates of the merge list.

In some embodiments, a TIMD and/or DIMD mode may be associated with fusion weights that may be modified before considered as associated information of the TIMD and/or DIMD modes of TIMD merge mode candidates of the merge list.

For example, the fusion weights may be modified or refined based on prediction costs associated with the TIMD and/or DIMD candidate modes. For example a refinement range may be defined where the weights iteratively modified according to the refinement value and the best performing refined weights may be determined according to the blended prediction cost. Below programming code of Table 1 shows an example of such process where the TIMD merge mode candidate includes two internal prediction modes. Two corresponding fusion weights ($Weight_0$ and $Weight_1$) are used for blending the two predictions ($Pred_0$ and $Pred_1$) derived from the two internal prediction modes. The two weights are refined based on the *refinementRange* values considering the SAD-based cost after blending. The best refined weights are determined from this process and used as blending weights in the final prediction.

```
int bestSad = MAX_INT;

int bestW0  = 0;

int bestW1  = 0;

for (int r = - refinementRange; r < refinementRange; r++)
{
        int sad = 0;
        int W0 = Weight0 + r;
        int W1 = Weight1 – r;
        for (int y = 0; y < tmpHeight; y++)
        {
                for (int x = 0; x < tmpWidth; x++)
                {
                        int pred[x][y] = (W0 * Pred0 [x][y]+ W1 * Pred1[x][y]) >>
shift;

                        sad += abs(pred[x][y] - recon[x][y]);
                }
        }
        If (sad < bestSad)
        {
                bestSad = sad;
                bestW0 = W0;
```

```
                    bestW₁ = W₁;

                }

        }
tmpHeight : template height
tmpWidth: template width
recon[x][y]: reconstructed sample value at location x, y
pred[x][y]: prediction sample value at location x, y after fusion
abs(): absolute value
>>: bit shift to the right
Shift: shift value
```

Table 1

In some embodiments, information associated with at least one internal prediction mode of a TIMD and/or DIMD mode may be modified before said information is considered as associated information of a TIMD merge mode candidate of the merge list.

For example, information associated with a TIMD and/or DIMD mode may be refined with a refinement delta angle ($\pm$ delta).

For example, the refinement delta angle used for modifying the information associated with a TIMD and/or DIMD mode may be determined as a value of a range of values that minimizes a prediction cost calculated for predicting a template of the current block based on a TIMD and/or DIMD mode once modified by a value of the range of values.

More precisely, a range of refinement delta angles is determined. A prediction cost is calculated for predicting the template of the current block based on the TIMD and/or DIMD mode once modified by a value of the range of values. The refinement delta angle is the value of the range of values that is associated with the minimum prediction cost.

In some embodiments, the refinement delta angle may be calculated based on a template of the current block.

In this case, first a TIMD merge mode is selected for the block. Then, its intra prediction mode is modified using different delta angles in a range of values. For each delta angle, the modified intra mode is applied to the reconstructed samples on the template and its cost is computed. Finally, the delta angle whose modified intra is minimizing the cost is selected. As this refinement process relies on reconstructed samples, the decoder can perform the same process, therefore, no signaling of the selected delta is necessary.

This embodiment is advantageous because it avoids signaling the refinement delta angle in the bitstream and thus does not increase the overall bitrate.

Table 2 provides an example programming code for refining information associated with one of the internal prediction modes, *Mode$_0$*, of a TIMD merge mode candidate of the merge list using *refinementRange.* The best refined mode according to the SAD-based cost over the template is stored and used as final intra prediction mode.

```
int bestSad = MAX_INT;

int bestMode0 = 0;

for (int r = - refinementRange; r < refinementRange; r++)
{
        int sad = 0;
        int M0 = Mode0 + r;
        Pred0 = IntraPredictionFunction(M0);
        for (int y = 0; y < tmpHeight; y++)
        {
                for (int x = 0; x < tmpWidth; x++)
                {
                        sad += abs(pred0[x][y] - recon[x][y]);
                }
        }
        If (sad < bestSad)
        {
                bestSad = sad;
```

```
        bestMode0 = M0;
        }
}
```

M0: refined intra prediction mode using refinement value of r

IntraPredictionFunction(M0): intra prediction function that predicts the template using intra M0

tmpHeight: template height

tmpWidth: template width

pred0[x][y]: intra prediction sample value at location (x, y) for the intra prediction M0

Table 2

In some embodiments, a TIMD merge mode candidate being associated with a refinement delta angle, an information indicating the refinement delta angle may be signaled in the bitstream. The refinement delta angle is thus known by both a decoder by decoding an information from the bitstream and the TIMD and/or DIMD mode of the TIMD merge mode candidate is modified according to the refinement delta angle.

In some embodiments, the at least one TIMD merge mode candidate of the merge list is previously used for intra prediction of an adjacent spatial neighboring blocks of the current block.

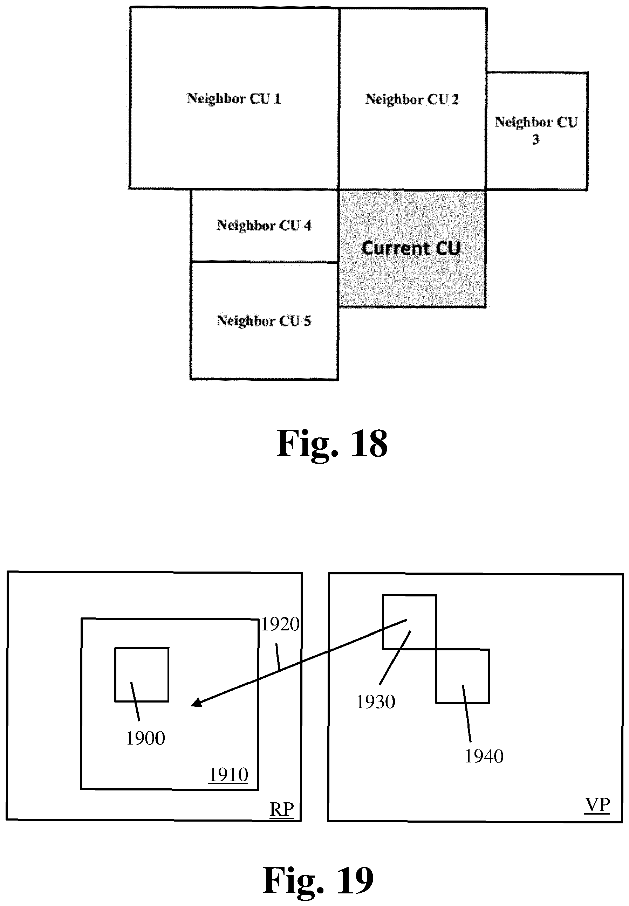

**Figure 18** shows examples of adjacent spatial neighboring blocks of the current block in accordance with some embodiments. An adjacent spatial neighboring blocks (Neighbor CU1-CU5) of the current block (current CU) may be defined as being a causal neighboring block that shares at least one pixel on the boundary with the current block. Causality of a neighboring block is defined from a coding ordering of the blocks of the video picture VP.

In some embodiments, the at least one TIMD merge mode candidate of the merge list is previously used for intra prediction of a non-adjacent spatial neighboring blocks of the current block.

For example, **Figure 10** shows non-adjacent spatial neighboring blocks of the current block.

In some embodiments, the merge list may contain at least one TIMD merge candidate previously used for intra prediction of a non-adjacent neighboring blocks of the current block and at least one TIMD merge mode candidate mode previously used for intra prediction of an adjacent spatial neighboring blocks of the current block.

In some embodiments, a reference area for non-adjacent neighboring blocks in previous embodiments may be defined in the specification of a standard.

For example, in practice, each block of the search area is considered and an intra-prediction mode previously used for intra prediction of the block is one TIMD merge mode candidate of the merge list if the intra-prediction mode is either a TIMD, TIMD merge, or DIMD or DIMD merge mode, i.e. if the intra-predictor of the block may be derived from reconstructed samples of the video. The block is then denoted a TIMD/DIMD block.

In some embodiments, the search area may be fixed.

In some embodiments, the search area may be defined from previously reconstructed blocks of the video picture VP.

In some embodiments, the search area may depend on the size (height and width) of the current block.

In some embodiments, the current block belonging to a current CTU, the search area may be limited to the already reconstructed blocks within the current CTU or within multiple CTUs.

In some embodiments, the current block belonging to a tile and/or slice, and/or sub-picture boundaries, the search area may be limited to the previously reconstructed blocks within the tile and/or slice, and/or sub-picture boundaries.

In some embodiments, the TIMD merge mode candidates in the merge list may be re-ordered based on the spatial distance (horizontal and/or vertical distance with respect to for example top-left corner of the current block) of the current block to the block that the TIMD merge mode candidate is inherited or collected from. For example, the TIMD merge mode candidates that are collected from immediate neighboring blocks of the current block may be put in the beginning of the merge list, and TIMD merge mode candidates that are collected from non-adjacent blocks of the current block are put after.

In some embodiments, the at least one TIMD mode candidate of the merge list may be previously used for intra prediction of a block in a reference picture in the reference picture buffer..

In some embodiments, the block in the reference picture is a co-located block of the current block in terms of horizontal and vertical coordinates with respect to the top-left corner of the video picture.

In some embodiments, an index indicating the reference picture may be either fixed or signaled in the bitstream for example in High Level Syntax (HLS) such as at picture, sub-picture, slice, tile or block level.

In some embodiments, the block in the reference picture is a co-located block of the current block in an extended area of the co-located block in the reference picture.

For example, the size of each extended area may be fixed, or it may be signaled in the bitstream (for example at a picture level), or it may be determined based on features of the block such as a block dimension or features of a video picture such as a picture number or features of the search area such as a number of reference pictures.

In some embodiments, the block in the reference picture may be a block in the reference picture indicated by a motion vector from an adjacent and/or non-adjacent block of the current block.

For example, illustrated in **Figure 19,** a co-located block 1900 of the search area may belong to a reference area 1910 in a reference picture RP of the video picture VP and the reference area 1910 may be indicated by a motion vector 1920 that is pointing to the reference area 1910 in the reference picture RP. The reference area 1910 may then comprise the co-located block 1900 of the current block and/or other block(s) of the reference picture RP.

In some embodiments, the motion vector 1920 may be inherited from one or more of the motion information of an adjacent and/or non-adjacent spatial neighboring blocks of the current block. **Figure 19** shows an example of motion vector 1920 that inherits from one adjacent spatial neighboring block 1930 of the current block 1940.

In some embodiments, the information indicating whether the TIMD merge mode is enabled to be a candidate for intra-prediction of the current block of the video picture may depend on the availability of the TIMD/DIMD blocks.

In some embodiments, if there is no available TIMD/DIMD block in the search area, then the information indicating whether the TIMD merge mode is enabled to be a candidate for intra-prediction of the current block of the video picture is not signalled in the bitstream and is implicitly derived to be false at the decoder side.

In some embodiments, the signaling of the index indicating the determined TIMD merge mode candidate in the merge list may depend on the availability of the TIMD/DIMD blocks in the search area.

In some embodiments, if a number of available TIMD/DIMD blocks in the search area is less than a maximum list size, the signaling of the index indicating the determined TIMD merge mode candidate in the merge list may be modified in order to save bits.

For example, if the maximum list size is five, but there are only three available candidates, then the signaling could be changed in order not to consider the index.

For example let's say the maximum list size is five. In this case, we may use the following unary codes signaling for the five possible indexes:

0 : index 0

10 : index 1

110 : index 2

1110 : index 3

1111 : index 4

However, if at the time of parsing, there are only three candidates available in the search area, then the unary codes is modified as follows:

0 : index 0

10 : index 1

110 : index 2

111 : index 3

By doing so, one bit is saved for index 3, because index 4 of the initial unary codes is not possible for current block.

In another example, if there is only one available TIMD/DIMD block in the search area, then the index indicating the determined TIMD merge mode candidate in the merge list is not signalled and implicitly known by a decoder.

In some embodiments, the TIMD or DIMD or TIMD merge mode and the associated information and possibly prediction cost of a TIMD/DIMD block may be stored in a history memory to be used as potential TIMD merge mode candidate in the merge list of a future block.

In some embodiments, the number of TIMD and DIMD and TIMD merge modes in the said history memory may be limited to a certain number of TIMD and DIMD and TIMD merge modes and the history memory may be updated as first in first out fashion as a new TIMD and DIMD and TIMD merge mode is inserted in the history memory, i.e. if the history memory has reached the certain number of TIMD and DIMD and TIMD merge modes then the oldest mode may be discarded from the history memory.

In some embodiments, when inserting a new TIMD and DIMD and TIMD merge mode to the history memory, a pruning check may be done in order to avoid adding duplicate mode to the history memory.

In some embodiments, the history memory may be reset at the beginning of each CTU or tile or slice or sub-picture. The resetting process of the history memory may be indicated in the bitstream for example in the HLS for example at slice level, picture level or sequence level.

In some embodiments, a TIMD merge mode candidate may also inherit transform types such as Low-Frequency Non-Separable Transform as defined in VVC and/or Multiple Transform Selection as defined in VVC from the block in the video corresponding to a candidate mode of the merge list.

In some embodiments, when a TIMD merge mode candidate contains two or more angular prediction modes (internal prediction modes) or the TIMD merge mode candidate is a single angular mode (internal prediction mode) without fusion, then the intra-prediction of the current block may be obtained by blending of the angular prediction mode(s) with a non-angular mode such as planar or DC prediction. The weight for the non-angular mode may be fixed, or it could be recalculated based on for example the prediction cost of the template.

In some embodiments, when the TIMD merge mode candidate contains two or more angular prediction modes (internal prediction modes) or the TIMD merge mode candidate is a single angular mode (internal prediction mode) without blending, the encoder may test the RDO performance of the TIMD merge mode candidate with and without blending it with a non-angular mode. In some embodiments, a flag may be signaled in the bitstream to indicate if the two or more angular prediction modes are blended or not.

For example, let's consider a current block B. At the neighborhood of the current block B and a merge list with one single TIMD merge mode candidate D is obtained. The TIMD merge mode candidate $D$ may contain two angular modes of 18 (pure horizontal) and 20 (diagonal). Predicting the TIMD merge mode candidate with blending indicates one of the two following predictions according to the signaled flag:

When the flag equals 0, the current block $B$ is predicted without DC/Planar and only using a fusion of modes 18 and 20. Fusion with DC/Planar is not used. When the flag equals 1, the current block $B$ is predicted with one of DC or Planar modes as a first mode, and 18 and 20 as second and third modes, respectively. To determine which of the modes DC or Planar shall be used as the first mode, a prediction is further performed on the template of the current block and a cost of calculated over the template samples. DC or planar mode is selected based on the cost. Evidently, the decoder has to do the same cost computation in case to determine the first mode.

In some embodiments, a decoder may determine the usage of non-angular modes (DC or planar) in the intra-predictor of the current block through the performance of the non-angular mode in the template. For example, if the non-angular mode's performance is worse than the angular modes of the TIMD merge mode candidate, then it may decide not to use it in the final prediction intra-predictor of the current block).

In some embodiments, a merge list may be obtained for each channel of the video picture and TIMD merge mode candidates of a merge list obtained for a first channel may be also belong to a merge list obtained for a second channel.

For example, a TIMD merge mode candidate (and its associated information) of a merge list obtained for a luma block (block of a first channel) may be also a TIMD merge mode candidate of a merge list obtained for a co-located chroma block (block of the second channel).

In some embodiments, a TIMD merge mode determined for a current block of a first channel of the video picture VP (e.g. a current luma block) may be inherited by a co-located block in a second channel of the video picture VP (e.g. a co-located chroma block).

In some embodiments, when a TIMD merge mode and its associated information is determined for a block of a first channel of the video picture VP (for example a luma block) and inherited by a co-located of a second channel of the video picture VP (for example a chroma block), some information associated with the TIMD merge mode determined for the block of the first channel such as weights may be re-calculated or modified based on a prediction cost evaluated based on samples of a template defined around the block the second channel. In particular, one information that can be modified is the weight of modes. This modification can be performed by applying a prediction on template samples, using given prediction modes. Then, computing the distortion-based cost of each prediction mode. Finally, determining the modified weight of each prediction mode by using the costs that were just computed.

This embodiment may be useful when the second channel is a chroma channel as chroma channel samples usually have smoother texture than luma samples (first channel).

When the luma and chroma channels of the video picture VP may have different block partitioning, the area covers by the co-located luma block may comprises multiple blocks associated with different TIMD merge modes.

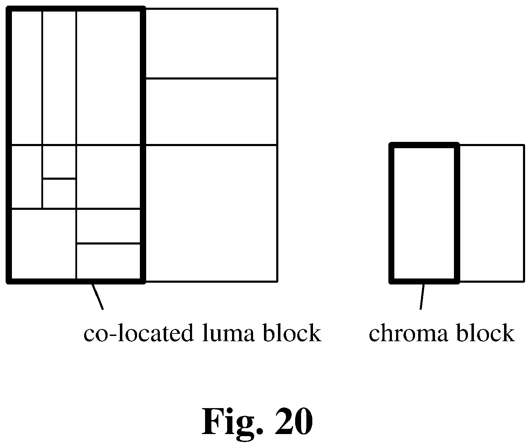

**Figure 20** shows an example of different block partitioning of a chroma block and the co-located luma block area in accordance with some embodiments. In this example, the area covered by the luma block comprises 10 blocks and more than one of these 10 blocks may be associated with a TIMD merge mode.

In some embodiments, the TIMD merge block inherited by the co-located block of the second channel (e.g. a chroma block) may be selected among TIMD merge modes associated with more than one co-located blocks of the first channel (e.g. luma blocks). Since, when Dual-Tree block partitioning is used, luma blocks' size is typically smaller than co-located chroma blocks. Therefore, a given chroma region might contain several co-located luma blocks,

In some embodiments, the luma and chroma channels may have different block partitioning. In such cases, for a chroma block, in order to inherit the TIMD merge mode information from a luma block, a search range in the co-located region of chroma block in luma channel may be defined. The search range may be fixed (for example defined in the specification of the standard), or it could depend on the block size. The search process scans the defined search area in co-located luma in order to find the TIMD merge mode information to be used for the chroma block. The search process may be stopped when the first TIMD merge mode is found.

In some embodiments, the search range depends on the size of the co-located block of the second channel.

In some embodiments, the scanning of the sub-blocks may stop when a first sub-block associated with a TIMD merge mode is found.

In some embodiments, the information indicating whether the TIMD merge mode is enabled to be the intra-predictor of the current block and/or the index indicating the selected candidate mode in the merge list may be entropy encoded and decoded.

In some embodiments, the information indicating whether the TIMD merge mode is enabled to be a candidate for intra-prediction of the current block and/or the index indicating the selected candidate mode in the merge list may be binarized and the bits may be encoded/decoded by a binary encoder/decoder.

In some embodiments, the binary encoded/decoder is a Context Adaptive Binary Arithmetic coder (CABAC).

In some embodiments, characteristics of either current block or neighboring blocks or both may be used to select the context (or equivalently the probability model), among a set of contexts, of CABAC that codes bits representing the information indicating whether the TIMD merge mode is enabled to be a candidate for intra-prediction of the current block and/or the index indicating the selected candidate mode in the merge list.

For example, a particular context may be selected when at least one TIMD and/or DIMD block is available in the search area.

In another example, particular contexts may be selected based on size of the current block.

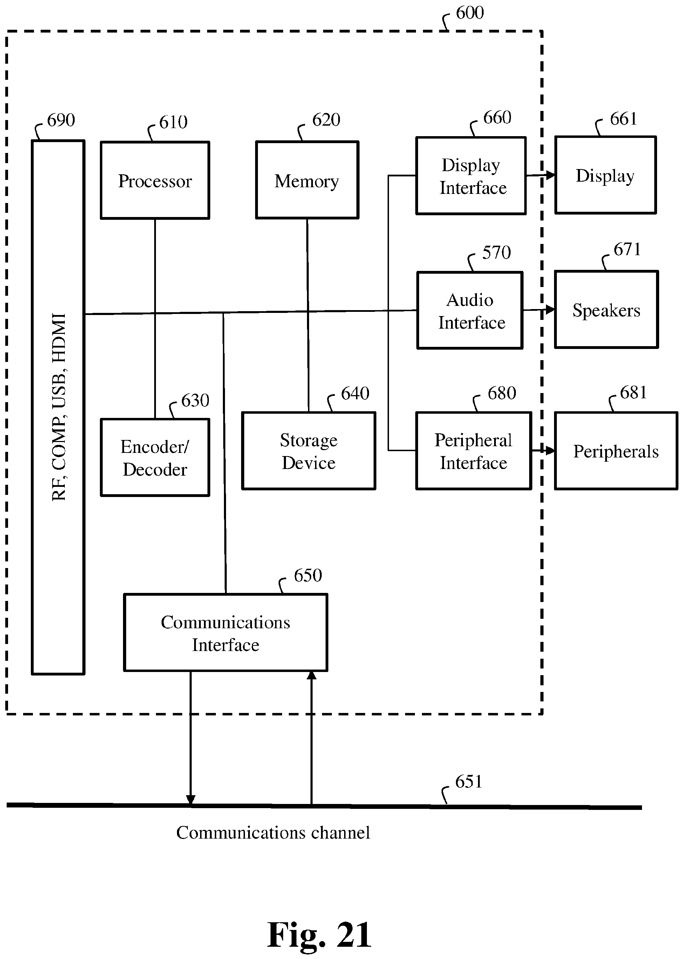

**Figure 21** shows a schematic block diagram illustrating an example of a system 600 in which various aspects and exemplary embodiments are implemented.

System 600 may be embedded as one or more devices including the various components described below. In various exemplary embodiments, system 600 may be configured to implement one or more of the aspects described in the present application.

Examples of equipment that may form all or part of the system 600 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 600, singly or in combination, may be embodied in a single integrated circuit (IC), multiple ICs, and/or discrete components. For example, in at least one exemplary embodiment, the processing and encoder/decoder elements of system 600 may be distributed across multiple ICs and/or discrete components. In various exemplary embodiments, system 600 may be communicatively coupled to other similar systems, or to other electronic devices, via, for example, a communications bus or through dedicated input and/or output ports.

System 600 may include at least one processor 610 configured to execute instructions loaded therein for implementing, for example, the various aspects described in the present application. Processor 610 may include embedded memory, input output interface, and various other circuitries as known in the art. System 600 may include at least one memory 620 (for example a volatile memory device and/or a non-volatile memory device). System 600 may include a storage device 640, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 640 may include an internal storage device, an attached storage device, and/or a network accessible storage device, as non-limiting examples.

System 600 may include an encoder/decoder module 630 configured, for example, to process data to provide encoded/decoded video picture data, and the encoder/decoder module 630 may include its own processor and memory. The encoder/decoder module 630 may represent module(s) that may be included in a device to perform the encoding and/or decoding functions. As is known, a device may include one or both encoding and decoding modules. Additionally, encoder/decoder module 630 may be implemented as a separate element of system 600 or may be incorporated within processor 610 as a combination of hardware and software as known to those skilled in the art.

Program code to be loaded onto processor 610 or encoder/decoder 630 to perform the various aspects described in the present application may be stored in storage device 640 and subsequently loaded onto memory 620 for execution by processor 610. In accordance with various exemplary embodiments, one or more of processor 610, memory 620, storage device 640, and encoder/decoder module 630 may store one or more of various items during the performance of the processes described in the present application. Such stored items may include, but are not limited to video picture data, information data used for encoding video picture data, a bitstream, matrices, variables, and intermediate or final results from the processing of equations, formulas, operations, and operational logic.

In several exemplary embodiments, memory inside of the processor 610 and/or the encoder/decoder module 630 may be used to store instructions and to provide working memory for processing that may be performed during encoding or decoding.

In other exemplary embodiments, however, a memory external to the processing device (for example, the processing device may be either the processor 610 or the encoder/decoder module 630) may be used for one or more of these functions. The external memory may be the memory 620 and/or the storage device 640, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 600 may be provided through various input devices as indicated in block 690.

Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 690 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 600 to other electronic devices across USB and/or HDMI connections. It is to be understood that various aspects of input processing, for example, Reed-Solomon error correction, may be implemented, for example, within a separate input processing IC or within processor 610 as necessary. Similarly, aspects of USB or HDMI interface processing may be implemented within separate interface ICs or within processor 610 as necessary. The demodulated, error corrected, and demultiplexed stream may be provided to various processing elements, including, for example, processor 610, and encoder/decoder 630 operating in combination with the memory and storage elements to process the data stream as necessary for presentation on an output device.

Various elements of system 600 may be provided within an integrated housing. Within the integrated housing, the various elements may be interconnected and transmit data therebetween using suitable connection arrangement 690, for example, an internal bus as known in the art, including the I2C bus, wiring, and printed circuit boards.

The system 600 may include communication interface 650 that enables communication with other devices via communication channel 651. The communication interface 650 may include, but is not limited to, a transceiver configured to transmit and to receive data over communication channel 651. The communication interface 650 may include, but is not limited to, a modem or network card and the communication channel 651 may be implemented, for example, within a wired and/or a wireless medium.

Data may be streamed to system 600, in various exemplary embodiments, using a Wi-Fi network such as IEEE 802.11. The Wi-Fi signal of these exemplary embodiments may be received over the communications channel 651 and the communications interface 650 which are adapted for Wi-Fi communications. The communications channel 651 of these exemplary embodiments may be typically connected to an access point or router that provides access to outside networks including the Internet for allowing streaming applications and other over-the-top communications.

Other exemplary embodiments may provide streamed data to the system 600 using a set-top box that delivers the data over the HDMI connection of the input block 690.

Still other exemplary embodiments may provide streamed data to the system 600 using the RF connection of the input block 690.

The streamed data may be used as a way for signaling information used by the system 600. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 600 may provide an output signal to various output devices, including a display 661, speakers 671, and other peripheral devices 681. The other peripheral devices 681 may include, in various examples of exemplary embodiments, one or more of a stand-alone DVR, a disk player, a stereo system, a lighting system, and other devices that provide a function based on the output of system 600.

In various exemplary embodiments, control signals may be communicated between the system 600 and the display 661, speakers 671, or other peripheral devices 681 using signaling such as AV.Link (Audio/Video Link), CEC (Consumer Electronics Control), or other communications protocols that enable device-to-device control with or without user intervention.

The output devices may be communicatively coupled to system 600 via dedicated connections through respective interfaces 660, 670, and 680.

Alternatively, the output devices may be connected to system 600 using the communications channel 651 via the communications interface 650. The display 661 and speakers 671 may be integrated in a single unit with the other components of system 600 in an electronic device such as, for example, a television.

In various exemplary embodiments, the display interface 660 may include a display driver, such as, for example, a timing controller (T Con) chip.

The display 661 and speaker 671 may alternatively be separate from one or more of the other components, for example, if the RF portion of input 690 is part of a separate set-top box. In various exemplary embodiments in which the display 661 and speakers 671 may be external components, the output signal may be provided via dedicated output connections, including, for example, HDMI ports, USB ports, or COMP outputs.

In **Figures 1-20,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 610 or by hardware, or by a combination of hardware and software. As a non-limiting example, the exemplary embodiments may be also implemented by one or more integrated circuits. The memory 620 may be of any type appropriate to the technical environment and may be implemented using any appropriate data storage technology, such as optical memory devices, magnetic memory devices, semiconductor-based memory devices, fixed memory, and removable memory, as non-limiting examples. The processor 610 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. -For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method (1500) of determining an intra-prediction mode, denoted TIMD merge mode, the method comprising:

- obtaining (1510) a merge list of at least one TIMD merge mode candidate, each TIMD merge mode candidate comprising at least one internal prediction mode and associated information used for intra-prediction; and
- determining (1520) the TIMD merge mode as candidate for intra-prediction of the current block from the merge list of TIMD merge mode candidates.

2. The method of claim 1, wherein a prediction cost for the TIMD merge mode is smaller than the prediction for other TIMD merge mode candidates of the merge list.

3. The method of claim 1, wherein the TIMD merge mode is determined by:

- obtaining (1521) a prediction cost over a template for each TIMD merge mode candidate mode of the merge list,; and
- selecting (1522) the TIMD merge mode based on the prediction cost obtained for the TIMD merge mode candidates.

4. The method of claim 3, wherein the selection of the TIMD merge is based on a Rate-Distortion optimization in which rate-distortion costs based on the obtained prediction costs are evaluated for intra-predictions of the current block, each intra-prediction being derived based on one TIMD merge mode candidate of the merge list.

5. The method of claims 3 or 4, wherein an index indicating the selected TIMD merge mode candidate is signalled in a bitstream.

6. The method of one claims 1 to 5, further comprising encoding (1530) in the bitstream, an information indicating whether the TIMD merge mode is enabled to be a candidate for intra-prediction of the current block of the video picture.

7. The method of one of claims 1 to 6, wherein the at least one TIMD merge mode candidate of the merge list is previously used for intra prediction of an adjacent and/or non-adjacent spatial neighboring block of the current block.

8. The method of one of claims 1 to 7, wherein the at least one TIMD mode candidate of the merge list is previously used for intra prediction of a block in a reference picture.

9. The method of claim 8, wherein the block in the reference picture is a co-located block of the current block or is in an extended area of the co-located block in the reference picture orthe block in the reference picture is a block in the reference picture indicated by a motion vector from an adjacent and/or non-adjacent spatial neighboring block of the current block.

10. The method of one of claims 1 to 9, wherein at least one TIMD merge mode candidate of the merge list comprises at least one template-based prediction mode and associated information used for intra-prediction a previously coded or decoded block.

11. The method of one of claims 1 to 10, wherein at least one TIMD merge mode candidate of the merge list comprises at least one decoder-side intra mode derivation mode (DIMD) and associated information used for intra-prediction a previously coded or decoded block, and/or at least one TIMD merge mode candidate of the merge list comprises at least one TIMD merge mode and associated information used for intra-prediction a previously coded or decoded block.

12. The method of one of claims 5 to 11, wherein the signaling of the index indicating the selected TIMD merge mode in the bitstream depends on the availability of the at least one block previously coded or decoded based on a template-based prediction mode, a decoder-side intra mode derivation mode or a TIMD merge mode.

13. The method of one of claims 1 to 12, wherein a merge list is obtained for each channel of the video picture and TIMD merge mode candidates of a merge list obtained for a first channel belongs to a merge list obtained for a second channel of the video picture.

14. The method of claim 13, wherein a TIMD merge mode determined as candidate for intra-prediction of a current block of a first channel of the video picture is inherited by a co-located block in a second channel of the video picture.

15. The method of one of claims 1 to 14, wherein the information associated with a TIMD merge mode candidate is at least one of the following information:

- Primary TIMD mode;
- TIMD fusion mode(s) which are used for blending with the primary TIMD mode;
- Fusion weights for primary and fusion modes, -Blending flag indicator, Template cost of the primary and/or fusion modes, -Transform type(s), -Wide angle conditions for primary and fusion modes.

16. A method of encoding video picture data comprising a method according to one of claims 1 to 15.

17. A method of decoding video picture data comprising a method according to one of claims 1 to 15.

18. An apparatus comprising means for performing one of the methods claimed in any one of claims 1 to 17.

19. A computer program product including instructions which, when the program is executed by one or more processors, causes the one or more processors to carry out a method claimed in any one of claims 1 to 17.

20. A non-transitory storage medium carrying instructions of program code for executing a method claimed in any one of claims 1 to 17.

**Fig. 1**

| NxN | 2Nx2N | Nx2N | 2NxN |

| nLx2N | nLx2N | 2NxnU | 2NxnD |

**Fig. 2**

Fig. 3

Fig. 4

**Fig. 5**

**Fig. 6**

**Fig. 7**

M1    M2

Reference samples

w1    w2    w3

Predict with $M_1$

Predict with $M_2$

Planar

Predictor block

**Fig. 8**

the collocated reconstructed luma samples

the current chroma block

**Fig. 9**

## Fig. 10

## Fig. 11

Reference_line 3
Reference_line 1
Reference_line 0

**Fig. 12**

(a)

(b)

**Fig. 13**

merge list

| |
|---|
| Candidate index 1 |
| Candidate index 2 |
| Candidate index 3 |
| Candidate index 4 |
| . |
| . |
| . |
| Candidate index N |

Prediction mode 1
Prediction mode 2
.
.
.
Prediction mode N
Fusion weight 1
Fusion weight 2
.
.
.
Fusion weight N
Fusion flag
Template cost mode 1
Template cost mode 2
.
.
.
Template cost mode N
Template cost after fusion
Transform types

## Fig. 14

## Fig. 15

|  | Descriptor |
|---|---|
| ... |  |
| sps_isp_enabled_flag | u(1) |
| sps_mrl_enabled_flag | u(1) |
| sps_mip_enabled_flag | u(1) |
| sps_timd_enabled_flag | u(1) |
| if( sps_timd_enabled_flag != 0 ) |  |
| sps_timd_merge_enabled_flag | u(1) |
| ... |  |
|  |  |

# Fig. 16

| if( CuPredMode[ chType ][ x0 ][ y0 ] = = MODE_INTRA { | Descriptor |
|---|---|
| ... |  |
| if( sps_timd_enabled_flag ) |  |
| intra_timd_flag | ae(v) |
| if( sps_timd_merge_enabled_flag && intra_timd_flag ) |  |
| intra_timd_merge_flag | ae(v) |
| if( intra_timd_merge_flag ) |  |
| intra_timd_merge_index[ x0 ][ y0 ] | ae(v) |
| ... |  |
|  |  |

# Fig. 17

**Fig. 18**

**Fig. 19**

co-located luma block          chroma block

# Fig. 20

**Fig. 21**

Europäisches
Patentamt
European
Patent Office
Office européen
des brevets

# EUROPEAN SEARCH REPORT

Application Number

EP 23 30 7055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/090700 A1 (TENG CHIH-YU [TW] ET AL) 23 March 2023 (2023-03-23)<br>* paragraph [0123] – paragraph [0123]; claim 3; figure 6 *<br>* paragraph [0183] – paragraph [0183] *<br>* paragraph [0143] – paragraph [0143] *<br>* paragraph [0211] – paragraph [0211] *<br>* paragraph [0226] – paragraph [0226] *<br>* paragraph [0156] – paragraph [0156] *<br>* paragraph [0127] – paragraph [0127] *<br>* paragraph [0165] – paragraph [0165] *<br>----- | 1-20 | INV.<br>H04N19/11<br>H04N19/147<br>H04N19/157<br>H04N19/176<br>H04N19/463 |
| A | US 2019/281290 A1 (LEE JIN-HO [KR] ET AL) 12 September 2019 (2019-09-12)<br>* paragraph [0753] – paragraph [0763] *<br>----- | 8,9 | |
| A | US 2022/394269 A1 (CAO KEMING [US] ET AL) 8 December 2022 (2022-12-08)<br>* paragraph [0075] – paragraph [0075] *<br>----- | 13 | |

TECHNICAL FIELDS
SEARCHED          (IPC)

H04N

The present search report has been drawn up for all claims

| Place of search | Date of completion of the search | Examiner |
|---|---|---|
| Munich | 1 March 2024 | Giuliani, Nicola |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 30 7055

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2024

| Patent document cited in search report | | Publication date | Patent family member(s) | | Publication date |
|---|---|---|---|---|---|
| US 2023090700 | A1 | 23-03-2023 | US | 2023090700 A1 | 23-03-2023 |
| | | | WO | 2023036341 A1 | 16-03-2023 |
| US 2019281290 | A1 | 12-09-2019 | US | 2019281290 A1 | 12-09-2019 |
| | | | US | 2021021816 A1 | 21-01-2021 |
| | | | US | 2022303528 A1 | 22-09-2022 |
| US 2022394269 | A1 | 08-12-2022 | NONE | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. ABDOLI et al.** Non-CE3: Decoder-side Intra Mode Derivation with Prediction Fusion Using Planar. *JVET-O0449, Gothenburg*, July 2019
- **HYEONGMUN JANG et al.** CE5-2.5 : De-block filtering with 4x4 chroma sample grid. *JVET-Y0092, Gothenburg*, July 2019
- **SAVERIO BLASI et al.** EE2-2.1 DIMD merge. *JVET-AF0120, Hannover*, October 2023
- **JUNYAN HUO et al.** EE2-related: Non-adjacent spatial candidates for DIMD merge. *Hannover*, October 2023